# EUROPEAN PATENT APPLICATION

(11) **EP 4 751 680 A1**
(43) Date of publication of application: **03.06.2026**
(21) Application number: 25219370.1
(22) Date of filing: 28.11.2025
(51) Int. Cl.: A61C 8/00

(54) **DENTAL PROSTHESES AND METHODS FOR USING SAME**

(30) Priority: 02.12.2024 US 202418965475
(71) Applicant: Stabili-Teeth Inc., Export PA 15632 (US)
(72) Inventor: MEDGAUS, Carl, Export, 15632 (US)
(74) Representative: Budde Schou A/S

(57) **Abstract**

A dental prosthesis includes one or more implants, a base member including an upper surface and a lower surface opposite the upper surface, the base member positionable on the one or more implants, a plurality of artificial teeth mounted to the upper surface of the base member, one or more retention arms engaging the one or more implants when the one or more retention arms are in an engaged position, and a locking member including one or more fingers movable between a locked position in which the one or more retention arms are inhibited from moving from the engaged position to a disengaged position and an unlocked position in which the one or more locking are permitted to move into the disengaged position from away from the one or more implants.

## Description

### TECHNICAL FIELD

The present specification generally relates to dental prosthetics and, more specifically, to systems and methods for securely attaching dental prosthetics in the oral cavity.

### BACKGROUND

When an individual loses all or a substantial portion of teeth in their maxillary or mandibular arches, the individual will often seek the assistance of a practitioner, who will generally recommend several different treatment options. Certain treatment options may be expensive, may require several follow up visits, may not be permanent, and/or may not be stable.

### SUMMARY

In one aspect, a dental prosthesis, including: one or more implants; a base member including an upper surface and a lower surface opposite the upper surface, the base member positionable on the one or more implants; a plurality of artificial teeth mounted to the upper surface of the base member; one or more retention arms engaging the one or more implants when the one or more retention arms are in an engaged position; and a locking member including one or more fingers movable between a locked position in which the one or more retention arms are inhibited from moving from the engaged position to a disengaged position and an unlocked position in which the one or more locking are permitted to move into the disengaged position from away from the one or more implants.

In another aspect, a dental prosthesis, including: a base member including an upper surface and a lower surface opposite the upper surface; a plurality of artificial teeth mounted to the upper surface of the base member; a pair of retention arms movable between an engaged position and a disengaged position; and a locking member including one or more fingers movable between a locked position in which the pair of retention arms are inhibited from moving from the engaged position to the disengaged position and an unlocked position in which the one or more locking are permitted to move into the disengaged position.

In yet another aspect, a method, including: installing a plurality of implants into a jaw bone of a subject; positioning a base member onto the jaw bone, a plurality of artificial teeth mounted to an upper surface of the base member; and rotating a pair of retention arms pivotally connected to the base member toward the plurality of implants to engage the plurality of implants and inhibit removal of the base member from the jaw bone.

These and additional features provided by the embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a bottom view of a dental prosthesis, according to one or more embodiments shown and described herein;
FIG. 2 schematically depicts a top view of the dental prosthesis, according to one or more embodiments shown and described herein;
FIG. 3 schematically depicts an abutment and a retention arm of the dental prosthesis, according to one or more embodiments shown and described herein;
FIG. 4 schematically depicts a cross-sectional view of the abutment inserted into a jaw of a subject and the retention arm in an engaged position engaging the abutment, according to one or more embodiments shown and described herein;
FIG. 5 schematically depicts a top view of the dental prosthesis with a retention arm in a disengaged position, according to one or more embodiments shown and described herein;
FIG. 6 schematically depicts an enlarged top perspective view of the dental prosthesis with a finger of the locking member in an unlocked position and one of the retention arms in the disengaged position, according to one or more embodiments shown and described herein;
FIG. 7 schematically depicts a top perspective view of the dental prosthesis with a tool engaging the locking member, according to one or more embodiments shown and described herein;
FIG. 8 schematically depicts a top perspective view of the dental prosthesis with the tool engaging the retention arm, according to one or more embodiments shown and described herein; and
FIG. 9 schematically depicts a flow diagram of a method for installing the dental prothesis, according to one or more embodiments shown and described herein.

### DETAILED DESCRIPTION

Embodiments described herein are directed to a dental prosthesis for inhibiting removal from a jaw bone of a subject and methods of using same. The dental prosthesis includes one or more retention arms that are pivotally attached to a base member that engage a plurality of implants mounted to the jaw bone. Various embodiments of the dental prosthesis and the operation of the dental prosthesis are described in more detail herein. Whenever possible, the same reference numerals will be used throughout the drawings to refer to the same or like parts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

As used herein, the singular forms "a," "an" and "the" include plural referents unless the context clearly dictates otherwise. Thus, for example, reference to "a" component includes aspects having two or more such components, unless the context clearly indicates otherwise.

The present disclosure generally relates to dental prostheses and methods for securing a dental prosthesis to the maxilla or mandible of a subject using a tool to facilitate engagement and disengagement of the dental prosthesis.

Dental prosthetics play a critical role in restoring oral functionality and improving patient quality of life by providing a means for effective chewing and food processing when natural teeth are lost or compromised. The primary objective of such prosthetics is to replicate the functions of natural teeth, which requires a secure and durable attachment to the underlying structure in the mouth. Traditionally, the installation of dental prostheses involves removing or reshaping any remaining natural teeth and surgically inserting dental implants directly into the patient's jaw bone. These implants are typically titanium or similar biocompatible materials and integrate with the bone to provide a stable foundation for mounting prosthetic teeth. With the implants securely anchored, abutments formed on an exposed end of the implant projects from the gums to serve as connection points for various types of dental prosthetics.

To ensure a strong, reliable connection between the implants and the prosthesis, various attachment mechanisms have been developed. These commonly include pressure retention rings and screws, which enable the prosthetic to be affixed securely to the abutments. Pressure retention rings typically encircle the abutment, allowing the prosthetic to grip the implant through frictional force, while screws directly fasten the prosthetic to the abutment, providing a firm mechanical bond. These methods are designed to prevent unwanted movement or dislodgment of the prosthesis during regular oral activities, such as chewing or speaking. However, traditional attachment techniques also present certain challenges, including the risk of loosening over time and potential damage to surrounding gum tissue due to repeated wear or pressure.

Despite the reliability of conventional attachment methods, there is a need for innovation in the field to address limitations related to stability, patient comfort, and the potential for improved integration with the oral cavity. Frequent maintenance may be required to adjust retention rings or replace worn screws, which can result in increased patient visits and higher longterm costs. Additionally, while pressure and screw-based attachments provide strong initial retention, they may not distribute force evenly, potentially causing discomfort or tissue strain in the surrounding area. Advancements in dental prosthetic attachment mechanisms could offer enhanced durability, more comfortable fitment, and ease of maintenance, addressing both patient and clinical needs in a more effective manner.

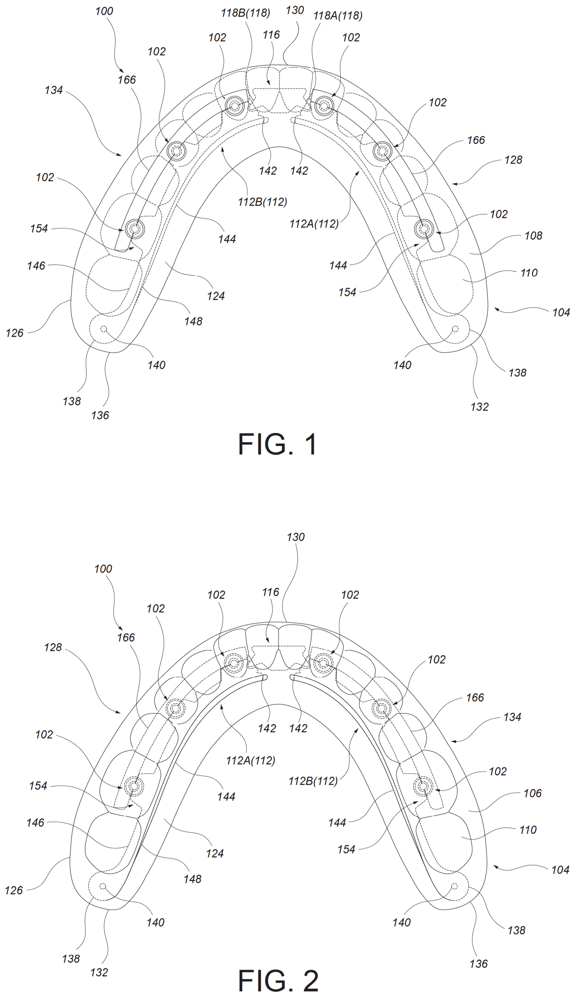

Referring now to FIGS. 1 and 2, a dental prosthesis 100 is illustrated according to one or more embodiments described herein. The dental prosthesis 100 may generally include one or more implants 102, a base member 104 including an upper surface 106 and a lower surface 108 opposite the upper surface 106, the base member 104 positionable on the one or more implants 102, a plurality of artificial teeth 110 mounted to the upper surface 106 of the base member 104, one or more retention arms 112 engaging the one or more implants 102 when the one or more retention arms 112 are in an engaged position, and a locking member 116 including one or more fingers 118 movable between a locked position in which the one or more retention arms 112 are inhibited from moving from the engaged position to a disengaged position and an unlocked position in which the one or more retention arms 112 are permitted to move into the disengaged position away from the one or more implants 102.

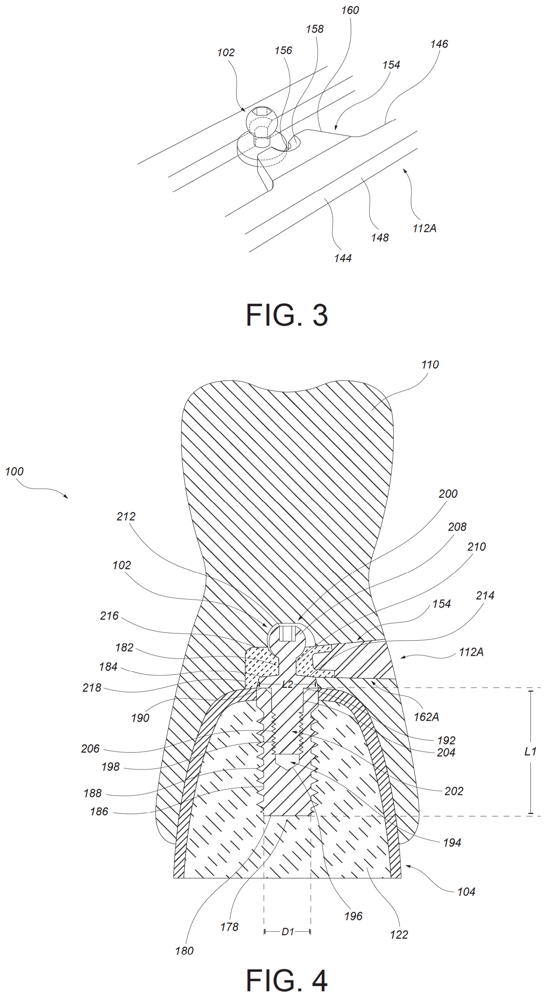

The base member 104 is an arcuate member conforming to the shape of a jaw bone 122 (FIG. 4) of a subject, as described in more detail herein. Accordingly, the base member 104 includes an arcuate inner surface 124 and an arcuate outer surface 126 opposite the arcuate inner surface 124. The arcuate inner surface 124 and the arcuate outer surface 126 extend between the upper surface 106 and the lower surface 108, and define a first side portion 128 extending from an apex 130 to a first end 132, and a second side portion 134 extending from the apex 130 toward a second end 136 opposite the first end 132. Thus, the first side portion 128 and the second side portion 134 meet at the apex 130.

As shown in FIGS. 1 and 2, the plurality of artificial teeth 110 are mounted to the upper surface 106 of the base member 104 and are positioned at locations corresponding to an ideal position of teeth for the subject. Accordingly, the number and placement of the artificial teeth 110 on the upper surface 106 of the base member 104 is not limited to that illustrated in FIGS. 1 and 2.

As shown, a first retention arm 112A and a second retention arm 112B of the retention arms 112 are pivotally connected to the base member 104. However, it should be appreciated that, in embodiments, only a single retention arm 112 is provided. In other embodiments, more than two retention arms 112 is provided. As used herein, the first retention arm 112A and the second retention arm 112B may be generally referred to as the retention arms 112 when not referring to either of the first retention arm 112A or the second retention arm 112B specifically. Accordingly, it should be appreciated that the first retention arm 112A and the second retention arm 112B have similar structure and like parts may be referred to with like reference numbers. The retention arms 112 each include a proximal end 138 including an aperture 140 formed therein, a distal end 142 opposite the proximal end 138, and an arm body 144 extending between the proximal end 138 and the distal end 142. Although not shown, a fastener, such as a threaded fastener, pin, or the like, extends through the aperture 140 formed in the proximal end 138 of the retention arms 112 and through a portion of the base member 104 to pivotally couple the retention arms 112 to the base member 104. As shown, the aperture 140 of each retention arm 112 is formed proximate the first end 132 and the second end 136 of the base member 104, e.g., closer to the first end 132 and the second 136 as opposed to the apex 130. The arm body 144 has a curvature corresponding to a curvature of the arcuate inner surface 124 of the base member 104. The arm body 144 has an inner edge 146 and an outer edge 148 opposite the inner edge 146.

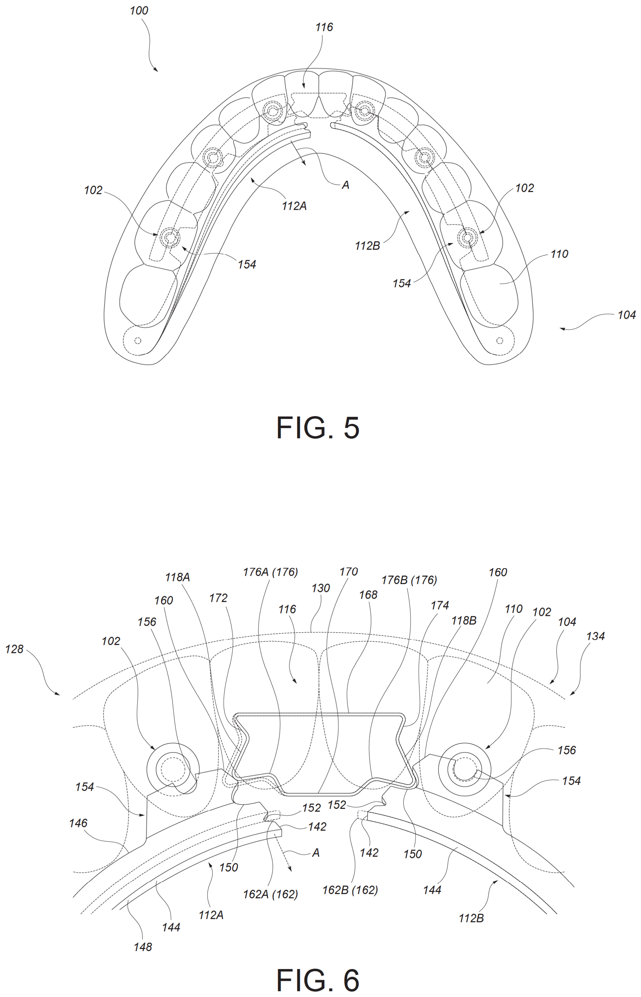

As shown in FIG. 6, in embodiments, a finger receiving recess 150 is formed in each of the retention arms 112. It should be appreciated that certain structural components shown in FIG. 6 are depicted in dashed lines to more clearly illustrate the retention arms 112 and the locking member 116. The finger receiving recess 150 may be formed in the inner edge 146 of the arm body 144 proximate the distal end 142. However, it should be appreciated that the finger receiving recess 150, if provided, may be formed in any suitable location of the retention arms 112. Additionally, in embodiments, a tool receiving recess 152 is formed in each of the retention arms 112. The tool receiving recess 152 may be formed in the distal end 142 of the retention arms 112 between the inner edge 146 and the outer edge 148 of the arm body 144. However, it should be appreciated that the tool receiving recess 152, if provided, may be formed in any suitable location of the retention arms 112.

Referring again to FIGS. 1 and 2, the retention arms 112 each include one or more implant engaging portions 154 extending from the inner edge 146 of the arm body 144. As shown, a plurality of implant engaging portions 154 are formed on the inner edge 146 of the arm body 144 of each of the retention arms 112. However, it should be appreciated that, in embodiments, only a single implant engaging portion 154 is formed on the inner edge 146 of the arm body 144 of either of the retention arms 112. In embodiments in which a plurality of implant engaging portions 154 are provided, the implant engaging portions 154 may be equidistantly spaced apart from one another.

As shown in FIG. 3, the implant engaging portions 154 extend from the inner edge 146 of the arm body 144 in a direction opposite the outer edge 148. An implant engaging recess 156 is formed in an edge of the implant engaging portion 154 opposite the inner edge 146 of the arm body 144. In embodiments, the implant engaging recess 156 defines a concave surface 158. As described in more detail herein, the implant engaging recess 156, and specifically the concave surface 158, if provided, is configured to mate with a respective implant 102. In embodiments, as best shown in FIG. 6, the implant engaging portion 154 includes a tapered edge 160 extending between the implant engaging recess 156 and the finger receiving recess 150. The tapered edge 160 is oriented such that an end of the tapered edge 160 closer to the arm body 144 is closer to the apex 130 as opposed to an opposite end of the tapered edge 160 spaced further from the arm body 144.

The retention arms 112 are movable between an engaged position, as shown in FIGS. 1 and 2, and a disengaged position, as shown in FIG. 3. As shown in FIG. 6, the retention arms 112 are received within respective first and second arm cavities 162A, 162B formed in the arcuate inner surface 124 of the base member 104 when in the engaged position to provide a flush appearance and reduce discomfort to the subject. As used herein, the first arm cavity 162A and the second arm cavity 162B may be generally referred to as the arm cavities 162 when not referring to either of the first arm cavity 162A or the second arm cavity 162B specifically. Accordingly, it should be appreciated that the first arm cavity 162A and the second arm cavity 162B have similar structure and like parts may be referred to with like reference numbers.

While FIGS. 1 and 2 depict a plurality of implants 102 being utilized, the present disclosure is not limited to such. That is, in some embodiments, a single implant 102 may be used. Additionally, the implant 102 may be either a standard implant or a narrow implant. Accordingly, in embodiments in which a plurality of implants 102 are used, a plurality of standard implants, a plurality of narrow implants, or a combination of standard implants and narrow implants may be used without departing from the scope of the present disclosure. The plurality of implants 102 are endosteal implants. In embodiments, the implants 102 are equidistantly spaced apart from one another. The number of implants 102 provided and positioning thereof should correspond to total number of implant engaging portions 154 provided on the retention arms 112. Additional structure and functionality of the implants 102 are described in more detail herein.

As shown in FIGS. 1 and 2, a reinforcing member 166 is provided within each of the first side portion 128 and the second side portion 134 of the base member 104. The reinforcing members 166 each extend along the implants 102 provided on a respective one of the first side portion 128 or the second side portion 134 of the base member 104. Accordingly, the reinforcing members 166 provide increased durability to the base member 104 when provided on the implants 102 and locked in position, as described in more detail herein.

Referring still to FIGS. 1 and 2, the locking member 116 is shown provided within the base member 104 at the apex 130 between adjacent implants 102. The locking member 116 is formed from a resilient material such as, for example, spring steel, silicone rubber, polycarbonate, and the like. With more particularity, as shown in FIG. 6, the locking member 116 includes a front wall 168, a rear wall 170 opposite the front wall 168, a first side wall 172 extending between the front wall 168 and the rear wall 170, and a second side wall 174 opposite the first side wall 172 and extending between the front wall 168 and the rear wall 170. The first side wall 172 includes a first finger 118A and the second side wall 174 includes a second finger 118B each extending outwardly. As used herein, the first finger 118A and the second finger 118B may be generally referred to as the fingers 118 when not referring to either of the first finger 118A or the second finger 118B specifically. Accordingly, it should be appreciated that the first finger 118A and the second finger 118B have similar structure and like parts may be referred to with like reference numbers.

A first tool receiving portion 176A is defined between the first finger 118A of the first side wall 172 and the rear wall 170, and a second tool receiving portion 176B is defined between the second finger 118B of the second side wall 174 and the rear wall 170. As used herein, the first tool receiving portion 176A and the second tool receiving portion 176B may be generally referred to as the tool receiving portions 176 when not referring to either of the first tool receiving portion 176A or the second tool receiving portion 176B specifically. In embodiments in which a pair of retention arms 112 are provided, the first side wall 172 and the second side wall 174 each include a finger 118. However, in other embodiments in which only a single retention arm 112 is provided, the locking member 116 may include only a single finger 118 corresponding to the single retention arm 112.

Referring still to FIG. 6, the locking member 116 is shown including the first finger 118A on the first side wall 172 in the unlocked position and the second finger 118B on the second side wall 174 in the locked position. However, the first finger 118A on the first side wall 172 is also depicted in the locked position by dashed lines. Additionally, it should be appreciated that reference may be made to the locking member 116 being in the unlocked position when the locking member 116 is deformed such that either or both fingers 118 are removed from a respective finger receiving recess 150 formed in the retention arms 112. For example, the locking member 116 may be positioned into the locking position, as shown in FIG. 6, in which the first finger 118A on the first side wall 172 is removed from the finger receiving recess 150 of the first retention arm 112A, and the second finger 118B on the second side wall 174 remains received within the finger receiving recess 150 of the second retention arm 112B. Accordingly, each of the fingers 118 do not need to be deformed to refer to the locking member 116 as being in the unlocked position. Rather, only a single finger 118 may be deformed to position the locking member into the unlocked position.

Referring now to FIG. 4, a cross-sectional view of the dental prosthesis 100 mounted onto the jaw bone 122, for example, the maxilla or mandible, of a subject is depicted. Specifically, the implants 102 are surgically installed into the jaw bone 122. The jaw bone 122 of FIG. 4 is shown after installation has taken place and the practitioner has closed a flap using sutures. As described further below, the practitioner creates the flap by making an incision at an installation site, separating the individual's tissue from the jaw bone 122 at the installation site, preparing the jaw bone 122 within the installation site to receive the implants 102, installing the implants 102, and suturing closed the flap.

As shown in FIG. 4, the implant 102 is illustrated positioned within the jaw bone 122 of the subject. In embodiments, the implant 102 includes a lower component 178 with a lower component body 180, and an upper component 182 with an upper component body 184. However, it is contemplated that a one piece implant may be used without departing from the scope of the present disclosure.

The lower component body 180 includes a lower component outer surface 186 having threads 188 and defines a lower component length L1 and a lower component diameter D1. The lower component length L1 may be between about 5 mm and about 18 mm, including but not limited to about 5 mm, about 7 mm, about 9 mm, about 10.5 mm, about 12 mm, about 15 mm, about 18 mm, or any value or range between any two of these values (including endpoints). The lower component diameter D1 may be between about 3.0 mm or and about 8 mm, including without limitation about 3.25 mm, about 3.5 mm, about 4 mm, about 4.5, mm, about 5 mm, about 5.5 mm, about 7 mm, about 8 mm or any value or range between any two of these values (including endpoints). In some embodiments, the lower component diameter D1 may be the diameter of the lower component body 180 only, where in other embodiments, the lower component diameter D1 may be the sum of the diameter of the lower component body 180 with the threads 188 formed on the lower component outer surface 186.

During installation, the lower component 178 is screwed into the jaw bone 122 such that the threads 188 formed on the lower component outer surface 186 engage with the jaw bone 122 and the jaw bone 122 retains the lower component 178 in position therein.

An upper end 190 of the lower component body 180 includes an opening 192 into an interior cavity 194 that is defined by one or more walls 196 of the lower component body 180. The interior cavity 194 may extend a distance within the lower component body 180. In some embodiments, the interior cavity 194 may have threads 198 formed on one of the walls 196 thereof.

The upper component body 184 includes an upper portion 200 and a lower portion 202 opposite the upper portion 200, where the lower portion 202 includes an outer wall 204. In some embodiments, threads 206 are formed on the outer wall 204 such that the upper component 182 may be threadably engaged with the threads 198 formed within the interior cavity 194 of the lower component 178, thereby causing the upper component 182 to interlock with the lower component 178.

The upper portion 200 of the upper component body 184 includes an abutment 208. The abutment 208 is exposed after the implant 102 has been installed into the jaw bone 122. The abutment 208 has a shape that is designed to be received by the base member 104, such that the base member 104 may be secured to the abutment 208 (e.g., snapped into place over the abutment 208), causing the abutment 208 and the base member to interlock.

As shown in FIG. 4, the abutment 208 is a ball abutment that includes an abutment cylinder 210. In embodiments, in which the abutment 208 is a ball abutment, the abutment 208 includes a generally spherically shaped ball abutment end 212 that is joined to the abutment cylinder 210, where the ball abutment end 212 has a diameter larger than a diameter of the abutment cylinder 210. However, it should be appreciated that this is merely one illustrative example, and other shapes and sizes of abutments may be used without departing from the scope of the present disclosure.

In embodiments, the upper component body 184 includes a collar 214 formed between the lower portion 202 and the upper portion 200 including the abutment 208. Specifically, the collar 214 may be provided between an upper end 190 of the lower portion 202 and the abutment cylinder 210. The collar 214 has a collar length L2 between less than about 0.1 mm and about 6 mm, including, without limit, about 0.5 mm, about 1 mm, about 2 mm, about 3 mm, about 4 mm, about 5 mm or about 6 mm, or any value or range between any two of these values (including endpoints).

As shown in FIG. 4, a cross-sectional view of the jaw bone 122 is illustrated with the implant 102 installed into an edentulous area in the installation site. As noted above, each implant 102 is installed into the jaw bone 122 after the practitioner has created the flap, extracted any teeth from the installation site, and reduced the jaw bone 122 at the installation site to create the necessary inter-occlusal space and an appropriate platform for implant installation. The upper component 182 of the implant 102, which includes the abutment 208, is screwed into the interior cavity 194 of the lower component 178 and the lower component 178 is screwed into the jaw bone 122, as described herein. However, it should be appreciated that the lower component 178 may be screwed into the jaw bone 122 and the upper component 182 subsequently screwed into the lower component 178.

While FIG. 4 shows the implant 102 installed in an edentulous area, it should be readily understood that the implant 102 may be installed within a tooth socket after tooth extraction, provided that there is enough bone surrounding the empty tooth socket to support and secure the implant 102 during and after installation. When the implant 102 is installed within a tooth socket, the practitioner may optionally insert bone graft material within the tooth socket after the implant 102 is installed but prior to the closing the flap. Adding the bone graft material may assist osseointegration of the implant 102 in some embodiments.

As shown in FIG. 4, in embodiments, a gasket 216 is provided within a cutout 218 formed in the artificial tooth 110. The gasket 216 may be secured within the cutout 218 to the artificial tooth 1 10 in any suitable manner such as by using an adhesive or the like. The gasket 216 may be formed of any suitable compressible material such as, for example, rubber, silicone, and the like. In other embodiments in which the implant 102 is not received within an artificial tooth 110, but rather in the base member 104 itself, the gasket 216 may be provided within a cutout formed in the base member 104.

With the base member 104 and the artificial tooth 110 lowered onto the implant 102, the gasket 216 is positioned around at least a portion of the upper component 182. As shown, the gasket 216 is provided around a portion of the collar 214 and at least partially circumscribes the upper portion 200 of the upper component 182 while leaving an upper end of the abutment 208 exposed. However, the position of the gasket 216 is not limited to that illustrated herein.

It should be appreciated that the gasket 216 provides a snug fit between the artificial tooth 110 and the implant 102 when the base member 104 is lowered on the jaw bone 122. With the retention arm 112 in the disengaged position, the base member 104 is permitted to be lowered onto the jaw bone 122 and subsequently removed. However, with the retention arm 112 received within the arm cavity 162, as shown in FIG. 4, and in the engaged position, the retention arm 112 compresses the gasket 216 to further grip the implant 102 and inhibit removal of the base member 104 from the jaw bone 122.

Direct contact between the retention arm 112 and the implant 102 may result in increased wear over time. Accordingly, the gasket 216 eliminates direct contact between the retention arm 112 and the implant 102, thereby increasing the life of the retention arm 112 and the implant 102. However, embodiments are considered in which the gasket 216 is not provided and the retention arm 112 directly engages the implant 102 to inhibit removal of the base member 104 from the jaw bone 122.

Now, operation of the dental prosthesis 100 and method of use is described in more detail. As shown in FIG. 5, a top view of the dental prosthesis 100 is illustrated with the first retention arm 112A on the first side portion 128 of the base member 104 in the disengaged position and the second retention arm 112B on the second side portion 134 in the engaged position. Specifically, once the locking member 116 is manipulated such that one of the fingers 118 is in the unlocked position, the associated retention arm 112 is permitted to move into the disengaged position. As shown, the first retention arm 112A is permitted to move in the direction of arrow A from the engaged position to the disengaged position, thus disengaging the implants 102 positioned at the first side portion 128 of the base member 104.

Referring again to FIG. 6, the relationship between the locking member 116, the retention arms 112, and the associated implants 102 are illustrated in more detail. As described herein, the locking member 116 includes the pair of fingers 118, which may each be independently positioned between the locked position and the unlocked position, as described in more detail herein. Accordingly, as shown in FIG. 6, the first finger 118A on the first side wall 172 of the locking member 116 is shown in the unlocked position with the first finger 118A removed from the finger receiving recess 150 formed in the first retention arm 112A. Alternatively, the second finger 118B on the second side wall 174 of the locking member 116 is shown in the locked position with the second finger 118B received within the finger receiving recess 150 formed in the second retention arm 112B.

More particularly, with the second retention arm 112B in the engaged position, the implant engaging portions 154 on the second retention arm 112B are positioned to be in contact with the implants 102. Specifically, the implants 102 are received within a respective implant engaging recess 156 formed in the implant engaging portions 154. Alternatively, in embodiments in which the implant engaging portions 154 do not directly contact the implants 102 and instead contact the gasket 216 provided between the implant 102 and the implant engaging portions 154, as described herein and illustrated in FIG. 4, the retention arms 112 compress the gasket 216 to inhibit removal of the base member 104 from the implants 102.

Referring still to FIG. 6, with the first retention arm 112A in the disengaged position, the implant engaging portions 154 on the first retention arm 112A are moved away and out of contact with the implants 102. Alternatively, in embodiments in which the implant engaging portions 154 do not directly contact the implants 102 and instead compress the gasket 216 around the implants 102, as described herein and illustrated in FIG. 4, the first retention arm 112A move in the direction of arrow A to allow the gasket 216 to expand and permit the base member 104 to be removed from the implants 102.

As described herein, the locking member 116 is formed from a resilient material. As such, the fingers 118 are permitted to return to the locked position once the respective retention arm 112 is moved out of the moving path of the finger 118 and into the disengaged position. Additionally, with respect to the first retention arm 112A, moving the first retention arm 112A in a direction opposite the direction of arrow A to position the first retention arm 112A back into the engaged position does not require independent manipulation of the first fingers 118A of the locking member 116. Specifically, as the first retention arm 112A is moved in the direction opposite the direction of arrow A and toward the engaged position, the tapered edge 160 of the implant engaging portion 154 contacts the first finger 118A of the locking member 116 and pushes the first finger into the unlocked position. Thus, the first finger 118A is moved out of the moving path of the first retention arm 112A and the first retention arm 112A is able to move back into the engaged position. Once the first retention arm 112 is in the engaged position, the first finger 118A automatically returns to the locked position to maintain the first retention arm 112A in the engaged position. It should be appreciated that operation of the second retention arm 112B and the second finger 118B is similar to that described herein with respect to the first retention arm 112A and the first finger 118A.

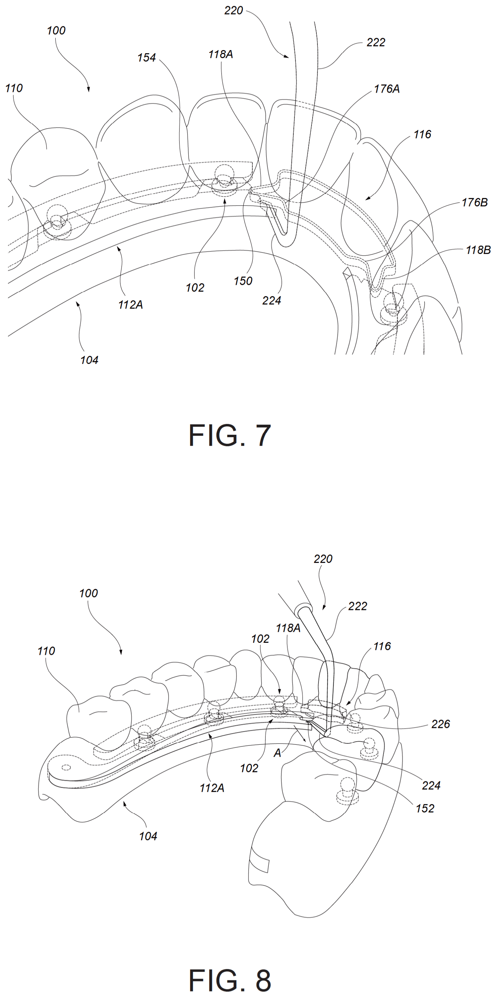

Referring now to FIG. 7, a tool 220 may be utilized to engage the first tool receiving portion 176A and/or the second tool receiving portion 176B of the locking member 116 to independently position the first finger 118A and/or the second finger 118B, respectively, of the locking member 116 into the unlocked position from the locked position. Specifically, as shown in FIG. 7, the tool 220 is shown including a handle portion 222 and a pick portion 224 extending from an end of the handle portion 222. In embodiments, the tool 220 may be a pick or the like.

Referring still to FIG. 7, with the fingers 118 each in the locked position, the tool 220 is inserted the first arm cavity 162A to contact the first tool receiving portion 176A of the first finger 118A of the locking member 116. Force is applied by the pick portion 224 against the first tool receiving portion 176A to urge the first finger 118A into the unlocked position. As described herein, the force applied by the tool 220 moves the first finger 118A out of the finger receiving recess 150 formed in the first retention arm 112A, thereby permitting the first retention arm 112A to move from the engaged position to the disengaged position away from the implants 102, as best illustrated in FIG. 6.

Referring now to FIG. 8, with the first finger 118A in the unlocked position, the pick portion 224 of the tool 220 is inserted into the tool receiving recess 152 formed in the first retention arm 112A to draw the first retention arm 112 in the direction of arrow A and into the disengaged position from the engaged position. In embodiments, the tool 220 includes a hook 226 formed at an end of the pick portion 224 opposite the handle portion that allows for both pushing on the first finger 118A and pulling of the first retention arm 112A.

Although operation of the tool 220 is described herein with respect to moving the first retention arm 112A into the disengaged position and subsequently moving the first finger 118A into the unlocked position, it should be appreciated that the tool 220 is similarly used to move the second retention arm 112B into the unlocked position and the second finger 118B into the disengaged position. Specifically, it should be appreciated that the above steps may be repeated to urge the second finger 118B of the locking member 116 into the unlocked position by applying a force against the second tool receiving portion 176B by the tool 220 and move the second finger 118B into the unlocked position. Subsequently, the tool 220 is used, as described herein, to engage the tool receiving recess 152 in the second retention arm 112B to move the second retention arm 112B into the disengaged position as well. With both of the retention arms 112 in the disengaged position, the base member 104 is permitted to be removed from the implants 102.

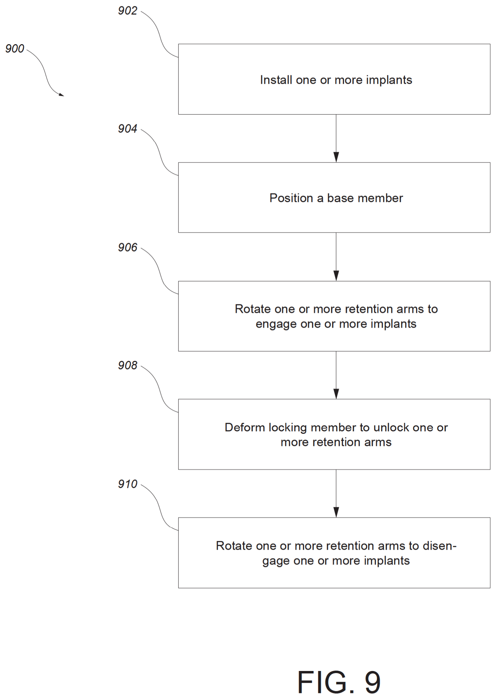

As shown in FIG. 9, and with reference to FIGS. 1-8, a flow diagram is depicted illustrating a method 900 for installing and using the dental prosthesis 100. At step 902, and as described herein, the implants 102 are surgically installed into the jaw bone 122 by making an incision at an installation site, creating a flap by separating the individual's tissue from the jaw bone 122 at the installation site, preparing the jaw bone 122 within the installation site to receive the implants 102, installing the implants 102, and suturing closed the flap. At step 904, the base member 104 is positioned onto the jaw bone 122 such that the implants 102 are received within a respective cutout 218. At step 906, the retention arms 112 are rotated to engage the implants 102. As described herein, the retention arms 112 may be rotated into engagement with the implants 102 using the tool 220. At step 908, the locking member 116 is deformed, such as by the tool 220 as described herein, to unlock the retention arms 112 and permit the retention arms 112 to move into the disengaged position. At step 910, the retention arms 112 are rotated into the disengaged position to disengage the implants 102 and permit the base member 104 to be removed from the implants 102 and, thus, the jaw bone 122.

From the above, it is to be appreciated that defined herein is a dental prosthesis for inhibiting removal from a jaw bone of a subject and methods of using same. The dental prosthesis includes one or more retention arms that are pivotally attached to a base member that engage a plurality of implants mounted to the jaw bone. A tool may be used to deform a locking member to permit the retention arms to move from an engaged position to a disengaged position relative to the implants. The tool is further used to specifically position the retention arms between the engaged position and the disengaged position to permit the removal of the base member from the jaw bone.

Further aspects of the embodiments described herein are provided by the subject matter of the following clauses:
A dental prosthesis, comprising: one or more implants; a base member including an upper surface and a lower surface opposite the upper surface, the base member positionable on the one or more implants; a plurality of artificial teeth mounted to the upper surface of the base member; one or more retention arms engaging the one or more implants when the one or more retention arms are in an engaged position; and a locking member including one or more fingers movable between a locked position in which the one or more retention arms are inhibited from moving from the engaged position to a disengaged position and an unlocked position in which the one or more locking are permitted to move into the disengaged position from away from the one or more implants.

The dental prosthesis of any preceding clause, wherein the base member comprises an arcuate inner surface and an arcuate outer surface opposite the arcuate inner surface, one or more arm cavities formed in the arcuate inner surface, the one or more retention arms received within a respective arm cavity of the one or more arm cavities when the one or more retention arms are in the engaged position.

The dental prosthesis of any preceding clause, wherein the one or more retention arms includes a pair of retention arms, and the one or more arm cavities includes a pair of arm cavities, each retention arm of the pair of retention arms received within a respective arm cavity of the pair of arm cavities.

The dental prosthesis of any preceding clause, wherein the one or more retention arms are pivotally attached to the base member.

The dental prosthesis of any preceding clause, wherein the one or more retention arms include one or more implant engaging portions that engage a respective implant of the one or more implants.

The dental prosthesis of any preceding clause, wherein the one or more implants includes a plurality of implants, and the one or more implant engaging portions include a plurality of implant engaging portions, each implant engaging portion of the plurality of implant engaging portions engaging a respective implant of the plurality of implants.

The dental prosthesis of any preceding clause, wherein the one or more implant engaging portions has an implant engaging recess that defines a concave surface.

The dental prosthesis of any preceding clause, wherein the implant includes a ball abutment that mates with the concave surface.

The dental prosthesis of any preceding clause, wherein the locking member is formed from a resilient material.

The dental prosthesis of any preceding clause, wherein the one or more fingers includes a pair of fingers, each finger of the pair of fingers engaging a respective retention arm of the pair of retention arms when the respective retention arm is in the engaged position.

A dental prosthesis, comprising: a base member including an upper surface and a lower surface opposite the upper surface; a plurality of artificial teeth mounted to the upper surface of the base member; a pair of retention arms movable between an engaged position and a disengaged position; and a locking member including one or more fingers movable between a locked position in which the pair of retention arms are inhibited from moving from the engaged position to the disengaged position and an unlocked position in which the one or more locking are permitted to move into the disengaged position.

The dental prosthesis of any preceding clause, wherein the base member comprises an arcuate inner surface and an arcuate outer surface opposite the arcuate inner surface, a pair of arm cavities formed in the arcuate inner surface, each retention arm of the pair of retention arms received within a respective arm cavity of the pair of arm cavities when the retention arm is in the engaged position.

The dental prosthesis of any preceding clause, wherein the pair of retention arms are pivotally attached to the base member.

The dental prosthesis of any preceding clause, wherein each retention arm of the pair of retention arms includes one or more implant engaging portions.

The dental prosthesis of any preceding clause, wherein the one or more implant engaging portions include a plurality of implant engaging portions, the plurality of implant engaging portion being equidistantly spaced apart from one another.

The dental prosthesis of any preceding clause, wherein the one or more implant engaging portions has an implant engaging recess that defines a concave surface.

A method, comprising: installing a plurality of implants into a jaw bone of a subject; positioning a base member onto the jaw bone, a plurality of artificial teeth mounted to an upper surface of the base member; and rotating a pair of retention arms pivotally connected to the base member toward the plurality of implants to engage the plurality of implants and inhibit removal of the base member from the jaw bone.

The method of any preceding clause, further comprising deforming a locking member using a tool to position one of a pair of fingers of the locking member into an unlocked position and permit a respective retention arm of the pair of retention arms to move from an engaged position to a disengaged position away from the plurality of implants.

The method of any preceding clause, further comprising rotating the pair of retention arms from the engaged position to the disengaged position using a tool to permit removal of the base member from the jaw bone.

The method of any preceding clause, wherein each retention arm of the pair of retention arms includes a plurality of implant engaging portions having an implant engaging recess defining a concave surface, the plurality of implants include a ball abutment that mates with a respective concave surface of each abutment engaging portion of the plurality of abutment engaging portions.

While particular embodiments have been illustrated and described herein, it should be understood that various other changes and modifications may be made without departing from the scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A dental prosthesis, comprising:
one or more implants;
a base member including an upper surface and a lower surface opposite the upper surface, the base member positionable on the one or more implants;
a plurality of artificial teeth mounted to the upper surface of the base member;
one or more retention arms engaging the one or more implants when the one or more retention arms are in an engaged position; and
a locking member including one or more fingers movable between a locked position in which the one or more retention arms are inhibited from moving from the engaged position to a disengaged position and an unlocked position in which the one or more locking are permitted to move into the disengaged position from away from the one or more implants.

2. The dental prosthesis of claim 1, wherein the base member comprises an arcuate inner surface and an arcuate outer surface opposite the arcuate inner surface, one or more arm cavities formed in the arcuate inner surface, the one or more retention arms received within a respective arm cavity of the one or more arm cavities when the one or more retention arms are in the engaged position.

3. The dental prosthesis of claim 2, wherein the one or more retention arms includes a pair of retention arms, and the one or more arm cavities includes a pair of arm cavities, each retention arm of the pair of retention arms received within a respective arm cavity of the pair of arm cavities.

4. The dental prosthesis of any one of claims 1-3, wherein the one or more retention arms are pivotally attached to the base member.

5. The dental prosthesis of any one of claims 1-4, wherein the one or more retention arms include one or more implant engaging portions that engage a respective implant of the one or more implants.

6. The dental prosthesis of claim 5, wherein the one or more implants includes a plurality of implants, and the one or more implant engaging portions include a plurality of implant engaging portions, each implant engaging portion of the plurality of implant engaging portions engaging a respective implant of the plurality of implants.

7. The dental prosthesis of claim 5 or claim 6, wherein the one or more implant engaging portions has an implant engaging recess that defines a concave surface.

8. The dental prosthesis of claim 7, wherein the implant includes a ball abutment that mates with the concave surface.

9. The dental prosthesis of any one of claims 1-8, wherein the locking member is formed from a resilient material.

10. The dental prosthesis of any one of claims 3-9, wherein the one or more fingers includes a pair of fingers, each finger of the pair of fingers engaging a respective retention arm of the pair of retention arms when the respective retention arm is in the engaged position.

11. A method, comprising:
installing a plurality of implants into a jaw bone of a subject;
positioning a base member onto the jaw bone, a plurality of artificial teeth mounted to an upper surface of the base member; and
rotating a pair of retention arms pivotally connected to the base member toward the plurality of implants to engage the plurality of implants and inhibit removal of the base member from the jaw bone.

12. The method of claim 11, further comprising deforming a locking member using a tool to position one of a pair of fingers of the locking member into an unlocked position and permit a respective retention arm of the pair of retention arms to move from an engaged position to a disengaged position away from the plurality of implants.

13. The method of claim 12, further comprising rotating the pair of retention arms from the engaged position to the disengaged position using a tool to permit removal of the base member from the jaw bone.

14. The method of any one of claims 11-13, wherein each retention arm of the pair of retention arms includes a plurality of implant engaging portions having an implant engaging recess defining a concave surface, the plurality of implants include a ball abutment that mates with a respective concave surface of each abutment engaging portion of the plurality of abutment engaging portions.
